# EUROPEAN PATENT SPECIFICATION

(11) **EP 2 489 547 B1**
(45) Date of publication and mention of the grant of the patent: **12.04.2017**
(21) Application number: 12382045.8
(22) Date of filing: 08.02.2012
(51) Int. Cl.: B60P 1/64, B62D 53/08

(54) **Kit for connecting a semi-trailer, corresponding road tractor and semi-trailer and method for delivering goods**
Satz zur Verbindung eines Sattelaufliegers, zugehöriger Straßenzugmaschine und Sattelauflieger sowie Verfahren zur Lieferung von Waren
Kit pour atteler une semi-remorque, tracteur routier et semi-remorque correspondants et procédé pour la livraison de marchandises

(30) Priority: 16.02.2011 ES 201130209
(43) Date of publication of application: 22.08.2012
(73) Proprietor: Aucar Trailer S.L., 08330 Premià de Mar (ES)
(72) Inventor: Hurtado Garcia, Fernando D., 08330 PREMIÀ DE MAR (ES)
(74) Representative: Curell Suñol S.L.P.

(56) References cited:
- EP-A1- 2 368 788
- ES-U- 1 061 965
- JP-A- 2002 120 774
- US-A- 2 986 408
- US-A- 3 004 772
- US-A- 3 410 576
- US-A- 4 111 451

## Description

### Field of the invention

The invention relates to a kit for connecting a semi-trailer of an articulated unit. The semi-trailer comprises a semi-trailer chassis and a coupling pin for a fifth wheel of a road tractor, usually called "king-pin", in the front part of the semi-trailer chassis. The articulated unit is made up of a road tractor or tractor which, in general, is a truck that includes a fifth wheel on its chassis and a semi-trailer that comprises a coupling pin (although the term "king pin" is very generalised, and is also used in Spanish) in the front part so that it can attach to the fifth wheel of the road tractor. The invention also relates to a semi-trailer of an articulated unit that comprises said coupling pin on its chassis. The invention relates also to a road tractor that comprises a truck chassis and a fifth wheel assembled on it as well as the road tractor unit with trailer. Finally, the invention relates also to a method for delivering goods arranged in two boxes.

### State of the art

The articulated units made up of a road tractor with a fifth wheel and a semi-trailer with a coupling pin for the fifth wheel, which usually include two boxes on the semi-trailer, are widely known.

An articulated unit made up of a road tractor with a fifth wheel and a semi-trailer with two boxes is also known wherein some elements have been included to allow the front box of the semi-trailer to be removed and placed directly on the chassis of the road tractor. An example of a unit of this type is described in Spanish utility model ES U200600102. These vehicles are used, for example, in driving schools to practice driving one single vehicle truck and an articulated road tractor unit with semi-trailer. EP 2 368 788 A1 published on 28.09.2011 claims the priority date of 18.03.2010. This late published document discloses a kit for removing a box from a semi-trailer and placing it directly on the chassis of a road tractor, thus allowing to reversibly convert an articulated unit with a semi-trailer in a conventional truck. This kit does not comprise a coupling pin for a fifth wheel of a road tractor suitable for being attached in the rear part of a semi-trailer.

Document US 4.111.451 describes a multi-trailer, dolly-connected, movable-axles containerized cargo system, generally related to trailers which are adapted to be hooked to and pulled by tractors, in particular those which are suited for containerized shipments, such as those commonly handled by air cargo and/or sea transporters. The improved cargo trailer system comprises a plurality of trailers with a dolly coupled therebetween, each of which trailers may be loaded and unloaded from either end, may be pulled or maneuvered from either end, may not incorporate a landing gear or other auxiliary supporting device, may be independently supported by its axles and may safely haul optimally balanced, multiple container loads over long distances. For this purpose, each trailer has two coupling pins for a fifth wheel (usually named "king-pins"), one at each end of the trailer.

Document US 2.986.408 relates to roadway vehicles, and in particular to a reversible trailer which is generally of the semi-trailer type but which is adapted to be loaded, unloaded and drawn from either end. The trailer of the present invention is a semi-trailer which, in contrast to semi-trailers of the conventional type, is reversible, so that it may be loaded and unloaded from either end, and which, moreover, can be drawn from either end by a tractor or other towing vehicle, whereby either end of the trailer may be backed up to a dock. The described semi-trailer comprises a chassis having a draft connection and a lowerable support at each end, a wheel suspension which is longitudinally shiftable along the chassis, and cargo-housing means mounted to the chassis having doors which face outwardly from both ends of the semi-trailer for loading and unloading.

Document US 3.410.576 describes a semitrailer having tandem-axle and wheel assemblies which are movable separately longitudinally of the trailer to facilitate reversal of the trailer without requiring the use of auxiliary retractable landing gear. The trailer includes a bed having longitudinally extending rails to which a pair of axle and wheel assemblies are slidably secured. Each of the axle and wheel assemblies has a separate brake system for its wheels which permit individual braking of each assembly. A locking pin arrangement is associated with each axle and wheel assembly to permit selective locking of the same at different longitudinal positions along the rails, and hitches are provided 1 at each end of the 1 bed for coupling the trailer to a tractor. The semitrailer has two king-pins, one at each end of the trailer.

Document JP 2002120774 describes a trailer capable of being used as a semi-trailer to be connected to a fifth wheel of a tractor or as a full-trailer to be connected to a rear part of a semi-trailer or a tractor with a baggage room when necessary in order to improve physical distribution efficiency. A king-pin to be connected to the fifth wheel of the tractor is provided at a front part side of a vehicle body of a center axle type trailer wherein a first and a third axle are eccentrically disposed in a center part thereof. The trailer comprises a connection rod expansion mechanism for forwarding a tip part of a connection rod to be connected to a connector of the semi-trailer or the tractor. It also comprises a baggage or retiring room. A tip part backward of the king-pin is provided on a bottom part of the vehicle body.

Document US 3.004.772 relates to an over-the-road semi-trailer provided with a structurally sound multi-body tandem axle vehicle which is readily convertible to individual single axle vehicles. It comprises of a pair of frameless van size cargo bodies each including a means to removably receive bogies, means separably and rigidly coupling said bodies together horizontally, said means transmitting tension, compression and shear forces from body to body in magnitudes sufficient to produce a unitary structure, and a pair of single axle bogies removably coupled adjacent each other to the rearmost body whereby any one of said bogies when uncoupled can be moved and removably coupled to the forward body so that after the bodies are uncoupled a pair of individual single axle trailers are produced.

The aim of this invention is to develop a new articulated unit that has additional advantages for delivering goods.

### Disclosure of the invention

This aim is achieved by means of a kit for connecting a semi-trailer of the type indicated at the beginning characterized in that it comprises a coupling pin for a fifth wheel of a road tractor, suitable for being attached in the rear part of the semi-trailer chassis.

Effectively, including a coupling pin for a fifth wheel in the rear part of the semi-trailer chassis, allows the road tractor to attach to the semi-trailer at the rear. The purpose of this attachment is not so that the unit can travel with the semi-trailer in the reverse position, but to facilitate passing the rear box of the semi-trailer to the road tractor. This way it is possible to assemble either of the two boxes, front and rear, on the road tractor. This way, as will be shown later, the articulated unit can be used for delivering goods in places where it is not possible (or it is not convenient) to do so with the current articulated unit. In fact, it will be possible with just the road tractor and one of the boxes assembled on it, giving it the shape of a conventional truck.

The kit can be manufactured in a workshop and can be supplied to the semi-trailer manufacturer, who could include it in semi-trailers where necessary.

Preferably the kit comprises a plurality of first anchoring elements suitable for being joined to the semi-trailer chassis, and two first attachment elements suitable for being joined to the semi-trailer chassis. These first anchoring and attachment elements make it possible to anchor and attach the boxes in the semi-trailer so that they do not move.

Advantageously two of the first anchoring elements are joined together forming a first rear overchassis suitable for being joined to the semi-trailer chassis, while another two of the first anchoring elements and one of the first attachment elements are joined together forming a second rear overchassis also suitable for being joined to the semi-trailer chassis, where the kit comprises two first rear overchassis and two second rear overchassis. In fact, usually it is more comfortable for the semi-trailer manufacturer to receive these components already joined together forming the said overchassis. Another preferable alternative consists in the first rear overchassis and the second rear overchassis are joined together forming one single rear overchassis. This way the kit would comprise two rear overchassis, each of which is intended to anchor and attach one of the semi-trailer boxes. It would even be possible to join these two rear overchassis so that one single rear overchassis comprises all the first anchoring elements and all the first attachment elements. The kit comprises a bumper with a collapsible mechanism, suitable for being attached to the rear part of the semi-trailer chassis. In fact, when it is desired to couple the road tractor to the coupling pin provided in the rear part of the semi-trailer, the rear bumper must be removed. To avoid having to dismantle the rear bumper, it is advantageous that said rear bumper can collapse in a reversible manner. In this respect it is interesting that the kit comprises a bumper of this type.

As already mentioned above, the semi-trailer is suitable for being coupled to a road tractor in a conventional manner (using a coupling pin, arranged in the front part of the semi-trailer). The road tractor comprises a truck chassis and said fifth wheel assembled on the truck chassis. The kit comprises:
a plurality of second anchoring elements suitable for being joined to the truck chassis,
a second attachment element suitable for being attached to the truck chassis, and a plurality of lifting means suitable for being arranged vertically under the truck chassis.

In fact, the second anchoring elements and the second attachment element are the elements equivalent to those of the semi-trailer, and they will allow the box to be anchored and attached to the truck chassis. For their part, the lifting means are necessary for passing the box from the semi-trailer to the truck, and from the truck to the semi-trailer, as will be seen later. In this respect it is advantageous that the kit comprises all these elements so that they can be installed on the truck chassis.

In fact it is particularly interesting that the lifting means be suitable for being arranged vertically under the truck chassis. In fact, said utility model ES U200600102 describes the existence of lifting means but these are housed inside the box. In the case of use as a driving school vehicle this fact is not very important as the box is not used for loading goods. However, in this case it is very interesting that the box fully coincides with conventional boxes, so as to facilitate the loading thereof and to provide inner dimensions appropriate for the standard loads in a conventional box. Providing the lifting means in the truck chassis, releases the box from this "servitude" which is a great advantage when used for delivering goods.

As in the case of the semi-trailer components, it is advantageous that two of the second anchoring elements be joined together forming a first front overchassis suitable for being joined to the truck chassis in the area in front of the fifth wheel, while another two of the second anchoring elements and the second attachment element are joined together forming a second front overchassis suitable for being joined to the truck chassis in the area behind the fifth wheel. Also as in the case of the components for the semi-trailer, another alternative solution would be that the first front overchassis and the second front overchassis are joined together forming one single front overchassis.

Preferably the kit comprises a lifting platform suitable for being attached to the rear part of the truck chassis. Advantageously the lifting platform is in the bottom of the rear part. In fact, in the case of using the road tractor as a truck, it is necessary to provide something that prevents a rear vehicle crashing into the underneath of the truck box. This could be achieved, for example, by including an anti-crash bar. However it is advantageous to include a lifting platform in the kit. This lifting platform could be attached to the rear part of the truck chassis and could be used when the road tractor is used as a truck, in other words, transporting one of the two boxes like a conventional truck. The lifting platform fulfils the functions of an anti-crash bar, whereby, with one single element, the two functions are achieved.

Advantageously each of the lifting means is a telescopic cylinder or a set of two cylinders assembled in parallel. In fact, as will be seen later, when passing the box from the semi-trailer to the road tractor or vice versa it is necessary to raise it to a certain height. However the space available between the truck chassis and the ground is limited. In this respect it is advantageous that the lifting means be telescopic cylinders or units of two cylinders assembled in parallel, to allow the box to be lifted to a greater height than the cylinder length in the folded position. The kit comprises in addition two box chassis, where each one, in turn, comprises
a plurality of support elements,
third anchoring elements suitable for anchoring in the first anchoring elements,
fourth anchoring elements suitable for anchoring in the second anchoring elements,
a horizontal cylinder with a rod at the end of which there is a third attachment element suitable for being attached indistinctively in the first attachment element or in the second attachment element, and
a hollow space suitable for housing in the inside thereof the fifth wheel.

In fact, these are the necessary components so that the boxes are compatible with the semi-trailer and the road tractor. The support elements will be used as a point of support for the lifting means arranged in the truck chassis, and the horizontal cylinder will allow the box to be moved horizontally, which will be necessary to anchor and release the box from the semi-trailer or road tractor. For its part the hollow space allows assembling the box on the road tractor without colliding with the fifth wheel.

Preferably the first and second anchoring elements are tubes arranged horizontally, and the third and fourth anchoring elements are joined together and form an inverted T shaped structure. Thanks to this geometry it is possible to achieve in a particularly simple way a reversible anchoring system for the boxes in the semi-trailer and in the road tractor.

As already mentioned before, the aim of the invention is a kit that includes the components necessary for transforming a semi-trailer and/or a road tractor into an articulated unit according to the invention. However, the aim of the invention is also directly a semi-trailer that already includes these components. In this respect, the aim of the invention is also a semi-trailer of an articulated unit, that comprises a semi-trailer chassis and a coupling pin for a fifth wheel of a road tractor in the front part of the semi-trailer chassis, characterized in that it comprises a second coupling pin for the fifth wheel of a road tractor arranged in the rear part of the semi-trailer chassis.

For the same reasons as those provided when describing the preferred kit alternatives, it is advantageous that:
- the semi-trailer comprises a plurality of first anchoring elements and two first attachment elements, joined to the semi-trailer chassis. Advantageously two of the first anchoring elements are joined together forming a first rear overchassis, while another two of the first anchoring elements and one of the first attachment elements are joined together forming a second rear overchassis, where the semi-trailer comprises two first rear overchassis and two second rear overchassis. Also a single rear overchassis could be formed that includes a first rear overchassis and a second rear overchassis.
- the semi-trailer comprises a rear bumper with a collapsible mechanism in the semi-trailer chassis.
- the semi-trailer comprises two box chassis each of which, in turn, comprises a plurality of support elements, third anchoring elements suitable for anchoring into the first anchoring elements, fourth anchoring elements, a horizontal cylinder with a rod at the end of which there is a third attachment element suitable for attaching in the first attachment element, and a hollow space suitable for housing in the inside thereof the fifth wheel.

As in the case of the semi-trailer, the aim of the invention is also a road tractor that comprises a truck chassis and a fifth wheel assembled on the truck chassis, characterized in that it comprises a plurality of second anchoring elements joined to the truck chassis, a second attachment element joined to the truck chassis, a plurality of lifting means arranged vertically under the truck chassis, and a lifting platform attached in the rear part of the truck chassis. Preferably each of the lifting means is a telescopic cylinder or a set of two cylinders assembled in parallel. Advantageously two of the second anchoring elements are joined together forming a first front overchassis joined to the truck chassis in the area in front of the fifth wheel, while another two of the second anchoring elements and the second attachment element are joined together forming a second front overchassis joined to the truck chassis in the area behind the fifth wheel. These two front overchassis could be joined together forming one single front overchassis.

The aim of the invention is also a road tractor unit with semi-trailer that includes a semi-trailer according to the invention. Preferably the unit also comprises a road tractor which comprises a truck chassis and a fifth wheel assembled on the truck chassis, and, in addition, it comprises: a plurality of second anchoring elements joined to the truck chassis, a second attachment element joined to the truck chassis, and a plurality of lifting means arranged vertically under the truck chassis. Preferably it also comprises a lifting platform attached to the rear part of the truck chassis, particularly in the bottom of the rear part of the truck chassis. Advantageously each of the lifting means is a telescopic cylinder or a set of two cylinders assembled in parallel.

The aim of the invention is also a method for delivering goods arranged in two boxes, characterized in that it comprises the following stages:
[a] select a road tractor unit with semi-trailer according to the invention,
[b] load the goods in the two boxes in a warehouse of origin,
[c] transport the road tractor with semi-trailer to an intermediate point,
[d] unload one of the boxes from the semi-trailer and load it directly onto the road tractor,
[e] transport the box in stage [d] along a first delivery circuit, with the road tractor without the semi-trailer,
[f] return the road tractor to the intermediate point in stage [c],
[g] unload the box (now without any goods, or with other goods) from the road tractor in stage [d] and load it onto the semi-trailer,
[h] unload the other box from the semi-trailer and load it directly onto the road tractor,
[i] take the box from stage [h] along a second delivery circuit (which can be the same as or different from the first delivery circuit),
[j] return the road tractor to the intermediate point in stage [c] unload the box (without any goods or with other goods) from the road tractor in stage [h] and load it onto the semi-trailer.

### Brief description of the drawings

Other advantages and characteristics of the invention will be evident from the following description, which, in a non-limiting manner, describes a preferred embodiment of the invention, with reference to the accompanying drawings, in which:
Fig. 1, is a diagrammatic view of a semi-trailer according to the invention.
Figs. 2 to 13, a diagrammatic view of a sequence of the stages in the method according to the invention.
Fig. 14, a diagrammatic view of a unit according to the invention in the stage corresponding to Fig. 4.
Fig. 15, a diagrammatic view of a road tractor with box in the stage corresponding to Fig. 5.
Fig. 16, a diagrammatic view of a road tractor with box in the stage corresponding to Fig. 6.
Fig. 17, a diagrammatic view of a road tractor with box in the stage corresponding to Fig. 7.
Fig. 18, a diagrammatic view of a unit according to the invention in the stage corresponding to Fig. 11.
Fig. 19, a perspective view of a first rear chassis according to the invention.
Fig. 20, a perspective view of a second rear overchassis according to the invention.
Fig. 21, a side elevation view of a box chassis according to the invention.
Fig. 22, a perspective view of third and fourth anchoring elements in an inverted T shape.
Fig. 23, a perspective view of a cylinder with a third attachment element.

### Detailed description of an embodiment of the invention

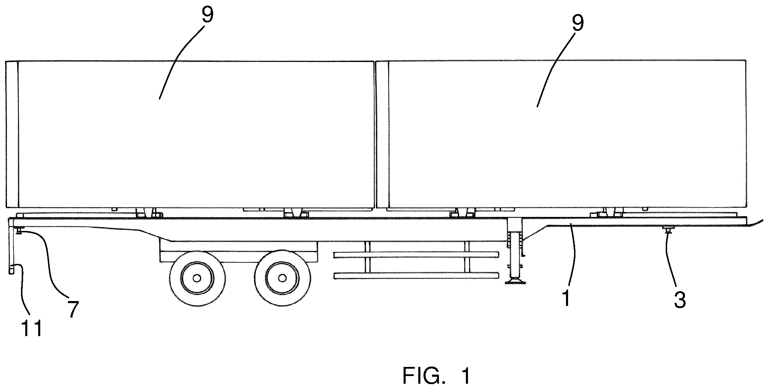

Fig. 1 shows a semi-trailer according to the invention. It comprises a semi-trailer chassis 1 and a first conventional coupling pin 3 for a fifth wheel 5 of a road tractor, arranged in the front part of semi-trailer chassis 1. The semi-trailer includes a second coupling pin 7 for a fifth wheel 5 arranged in the rear part of the semi-trailer chassis 1. On the semi-trailer there are two boxes 9. In the rear part of the semi-trailer there is a rear bumper 11 with a collapsible mechanism.

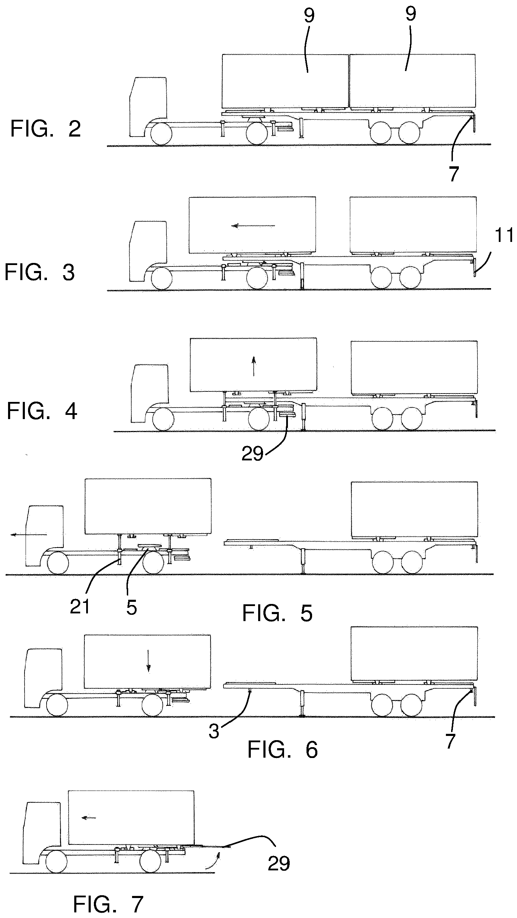

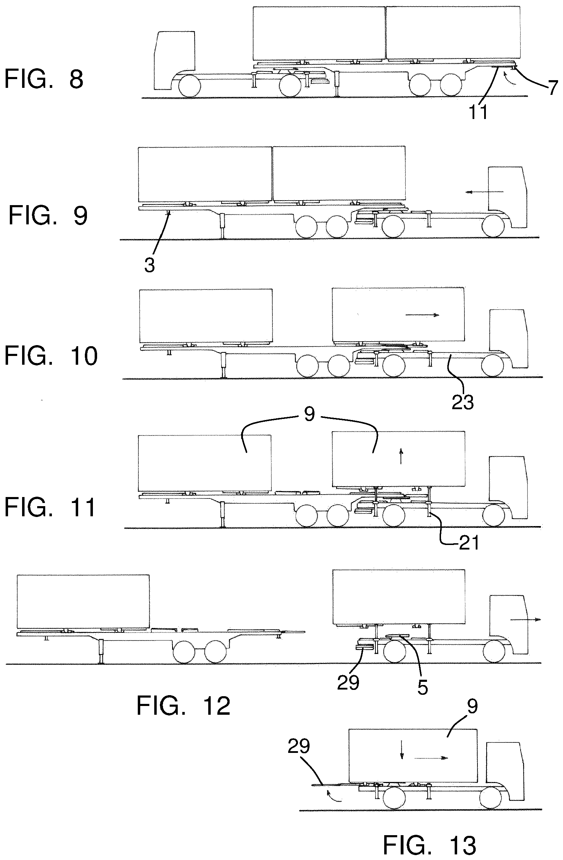

Figs. 2 to 13 show a diagrammatic sequence of the stages that are carried out to pass boxes 9 to the road tractor. Fig. 2 shows the articulated unit in its conventional arrangement. In Fig. 3 box 9 is moved forwards by horizontal cylinder 13 arranged in the box chassis 15. This horizontal forwards movement makes it possible to release the first anchoring means 17 arranged in the semi-trailer with respect to the corresponding third anchoring elements 19 arranged in the box chassis 15. Fig. 4, shows how front box 9 is raised using lifting means 21 provided in the road tractor. Then (Fig. 5) the road tractor moves forwards taking front box 9, after which (Fig. 6) box 9 is lowered so that it rests on truck chassis 23. Horizontal cylinder 13 again moves box 9 forwards (Fig. 7) whereby the fourth anchoring elements 25 provided in box chassis 15 anchor into the second anchoring elements 27 arranged in truck chassis 23. At this point box 9 is fully attached to truck chassis 23 and the road tractor, now converted into a conventional truck, can carry out the first delivery circuit. The truck could therefore access destinations which the articulated unit could not access and/or would have trouble accessing. Having completed the first delivery circuit the road tractor/truck returns to the place where it left the semi-trailer parked and passes box 9 to the semi-trailer, carrying out a series of stages substantially in reverse order to the stages mentioned above (Fig. 8). Then the road tractor couples onto the semi-trailer at the rear, using for this purpose the second coupling pin 7 (Fig. 9). In order to be able to carry out this coupling, rear bumper 11 must collapse so that it allows fifth wheel 5 of the road tractor to couple onto second coupling pin 7. Then a series of stages are carried out similar to those above, in other words, rear box 9 is moved backwards by means of cylinder 13 provided in box chassis 15 (Fig. 10), box 9 is raised by lifting means 21 in the road tractor (Fig. 11) and said road tractor advances separating itself from the semi-trailer (Fig. 12). Finally, box 9 is lowered until it rests on truck chassis 23 and cylinder 13 moves box 9 forwards (Fig. 13) after which the road tractor, newly converted into a truck can carry out the second delivery circuit. Finally the road tractor/truck returns to the place where it left the semi-trailer parked, passes box 9 to the semi-trailer again carrying out the reverse sequence to the one described and, after coupling to coupling pin 3 provided in the front part of the semi-trailer it is converted into a conventional articulated unit.

Both Fig. 7 and Fig. 13 also show how lifting platform 29 can be extended to facilitate loading and unloading box 9. Normally lifting platform 29 will be in a folded position under truck chassis 23.

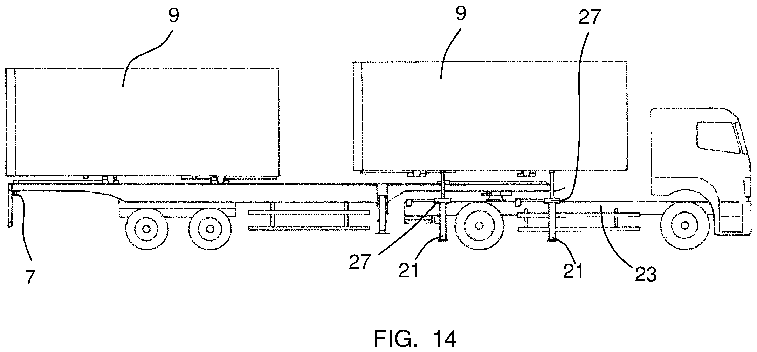

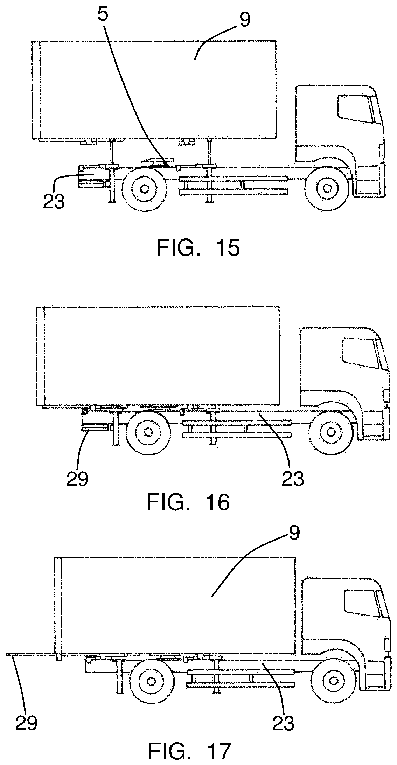

Fig. 14 shows in greater detail the articulated unit in Fig. 4. It can be seen how lifting means 21 carry front box 9 which illustrates its third anchoring means 19 and fourth anchoring means 25 (in the shape of an inverted T) free whereby the road tractor can move, separating itself from the semi-trailer and taking with it box 9, as shown in Fig. 15. Fig. 16, which corresponds to Fig. 6, shows the moment when box 9 rests now on truck chassis 23 but the fourth anchoring means 25 have not yet been anchored to the second anchoring elements 27 provided on truck chassis 23. Fig. 17, corresponding to Fig. 7, shows how box 9 has now been moved forwards so that the fourth anchoring means 25 have been anchored into the third anchoring means 19 whereby the road tractor, converted into a truck, is now ready to start its route. Again lifting platform 29 is shown in the extended position.

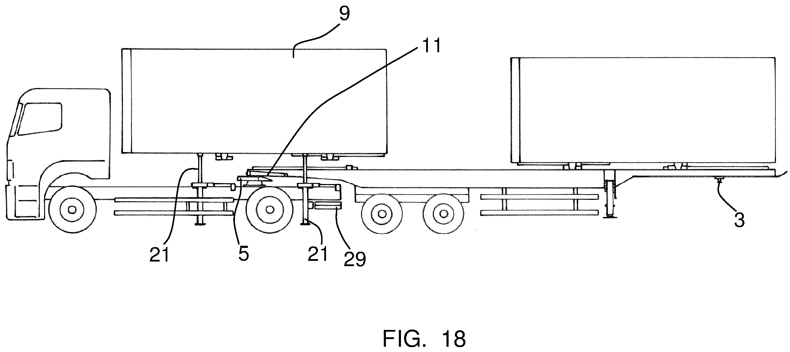

Fig. 18, corresponding to Fig. 11, shows the road tractor coupled to the second coupling pin 7 and with rear box 9 already released from the semi-trailer and resting on lifting means 21.

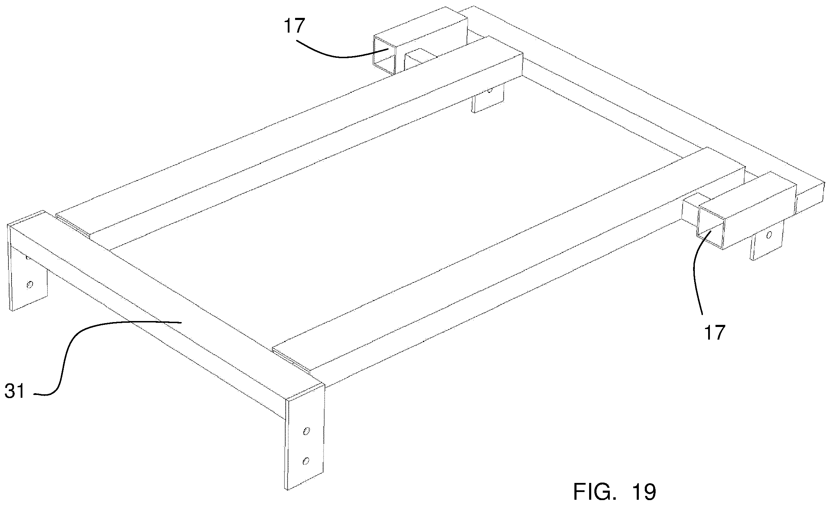

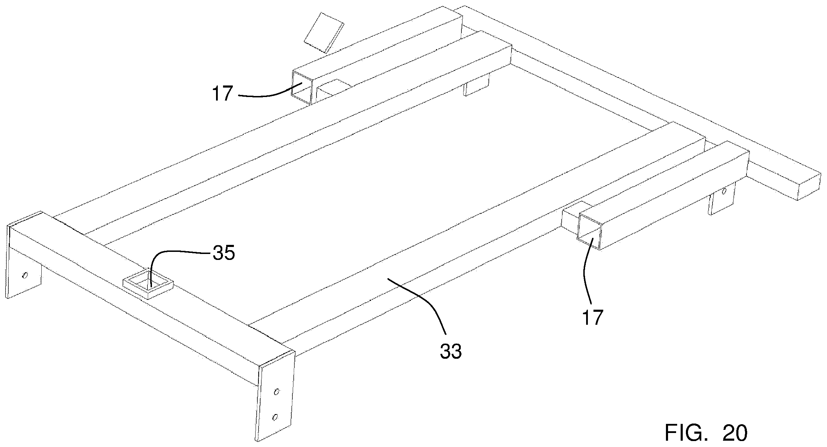

Fig. 19 shows an example of a first overchassis 31 according to the invention. It comprises two first anchoring elements 17. For its part, Fig. 20 shows an example of a second rear overchassis 33 according to the invention, comprising another two first anchoring elements 17 and a first attachment element 35. The first anchoring elements 17 are substantially a square section tube, and the first attachment element 35 is substantially a housing, with a square section and a pyramidal or conical bottom end. In this embodiment, the second anchoring elements 27, provided in truck chassis 23, are also substantially a square section tube and the second attachment element, also provided on truck chassis 23, is the same shape as the first attachment element 35.

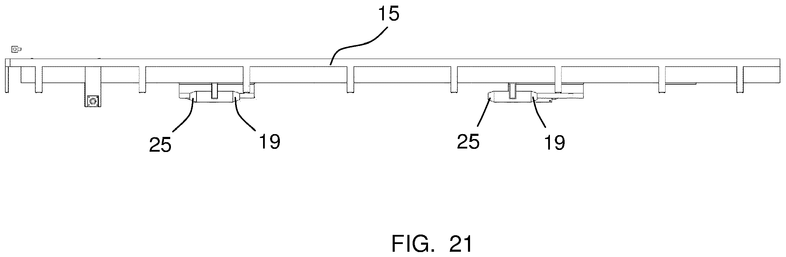

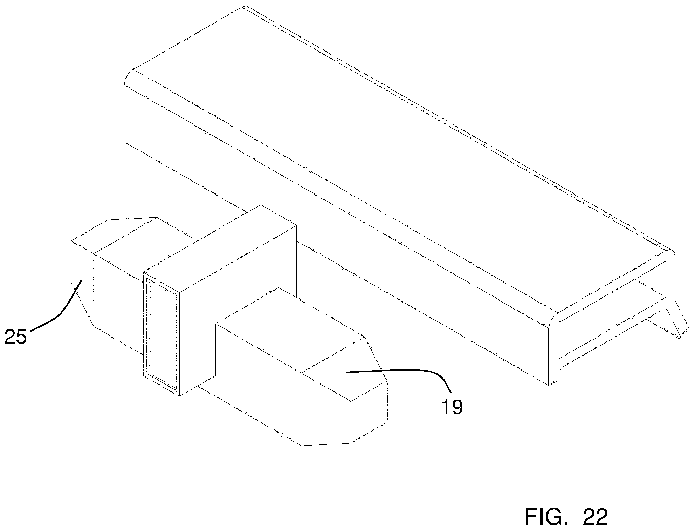

Fig. 21 shows a box chassis 15 according to the invention. It comprises third anchoring elements 19 and fourth anchoring elements 25 joined together forming an inverted T-shaped structure, as shown in greater detail in Fig. 22. The third anchoring elements 19 and fourth anchoring elements 25 are substantially square section tubes or bars suitable for being housed inside the first anchoring elements 17 and the second anchoring elements 27, respectively.

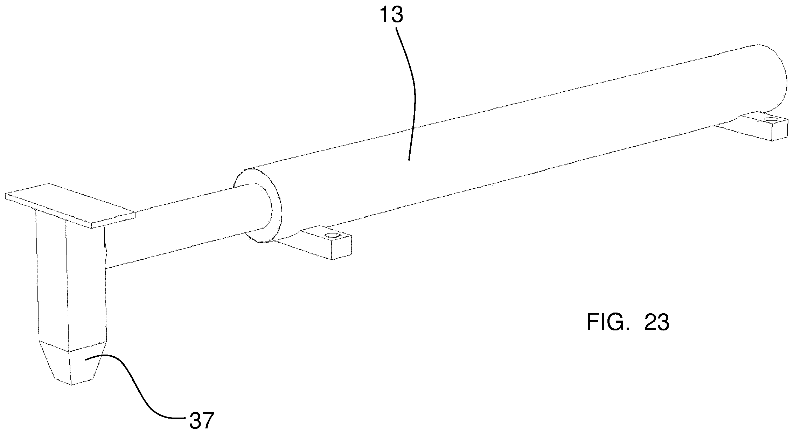

The box chassis 15 also includes, in the inside thereof, a horizontal cylinder 13 with a third attachment element 37 assembled at the end of its rod, as shown in Fig. 23. Although not shown in Fig. 21, because horizontal cylinder 13 is included in the plane made up of box chassis 15, cylinder 13 is arranged longitudinally with respect to box chassis 15. This way, when box 9 is on semi-trailer chassis 1 or truck chassis 23, the third attachment element 37 is housed inside the first attachment element 35 or the second attachment element, respectively. So, if cylinder 13 is activated, it drags the whole box 9 forwards or backwards. This way it is possible to create the relative movement that allows the third anchoring elements 19 (or the fourth anchoring elements 25) to enter and exit the first anchoring elements 17 (or the second anchoring elements 27). However, when lifting box 9 with lifting means 21, the third attachment element 37 comes out of the first attachment element 35 (or of the second attachment element), whereas when lowering box 9 the third attachment element 37 is inserted into the first attachment element 35 or into the second attachment element, thereby remaining attached without the need for additional operations.

Furthermore, box chassis 15 has, in the inside thereof, a hollow space suitable for housing the fifth wheel 5 of the road tractor so that there are no interference problems when box 9 is assembled on truck chassis 23. In fact, this hollow space must be sized so that it takes into account the horizontal movement of box 9 for anchoring and releasing box 9 from truck chassis 23.

## Claims

1. Kit for connecting a semi-trailer of an articulated unit, where said semi-trailer comprises a semi-trailer chassis (1) and a coupling pin (3) for a fifth wheel (5) of a road tractor in the front part of said semi-trailer chassis (1), where said road tractor comprises a truck chassis (23) and a fifth wheel (5) assembled on said truck chassis (23), said kit comprising:
[a] a coupling pin (7) for a fifth wheel (5) of a road tractor, suitable for being attached in the rear part of said semi-trailer chassis (1),
[b] a plurality of first anchoring elements (17) suitable for being joined to said semi-trailer chassis (1),
[c] two first attachment elements (35) suitable for being joined to said semi-trailer chassis (1),
[d] a bumper with a collapsible mechanism, suitable for being joined to the rear part of said semi-trailer chassis (1),
[e] a plurality of second anchoring elements (27) suitable for being joined to said truck chassis (23),
[f] a second attachment element suitable for being joined to said truck chassis (23),
[g] two box chassis,
[h] a plurality of lifting means (21) suitable for being arranged vertically under said truck chassis (23), said lifting means (21) being able to raise said box chassis (15),
[i] each of the two box chassis (15) in turn, comprises:
[i1] a plurality of support elements,
[i2] third anchoring elements (19) suitable for anchoring in said first anchoring elements (17),
[i3] fourth anchoring elements (25) suitable for anchoring in said second anchoring elements (27),
[i4] a horizontal cylinder (13) with a rod at the end of which there is a third attachment element (37) suitable for being attached indistinctively in said first attachment element (35) or in said second attachment element, and
[i5] a hollow space suitable for housing in its inside said fifth wheel (5).

2. Kit according to claim 1, **characterized in that** two of said first anchoring elements (17) are joined together forming a first rear overchassis (31) suitable for being joined to said semi-trailer chassis (1), while another two of said first anchoring elements (17) and one of said first attachment elements (35) are joined together forming a second rear overchassis (33) also suitable for being joined to said semi-trailer chassis (1), where said kit comprises two first rear overchassis (31) and two second rear overchassis (33).

3. Kit according to one of claims 1 or 2, **characterized in that** two of said second anchoring elements (27) are joined together forming a first front overchassis suitable for being joined to said truck chassis (23) in the part in front of said fifth wheel (5), while another two of said second anchoring elements (27) and said second attachment element are joined together forming a second front overchassis suitable for being joined to said truck chassis (23) in the part behind said fifth wheel (5).

4. Kit according to any one of the claims 1 to 3, **characterized in that** each of said lifting means (21) is a telescopic cylinder or a set of two cylinders assembled in parallel.

5. Semi-trailer in an articulated unit, which comprises a semi-trailer chassis (1) and a coupling pin (3) for a fifth wheel (5) of a road tractor in the front part of said semi-trailer chassis (1), where said road tractor comprises a truck chassis (23) and a fifth wheel (5) assembled on said truck chassis (23), said semi-trailer comprising a second coupling pin (7) for a fifth wheel (5) of a road tractor arranged in the rear part of said semi-trailer chassis (1), **characterized in that** it comprises a plurality of first anchoring elements (17) and two first attachment elements (35), joined to said semi-trailer chassis (1), a rear bumper (11) with a collapsible mechanism in said semi-trailer chassis (1),
two box chassis (15) each of which, in turn, comprises a plurality of support elements, third anchoring elements (19) suitable for anchoring in said first anchoring elements (17), fourth anchoring elements (25), a horizontal cylinder (13) with a rod at the end of which there is a third attachment element (37) suitable for attaching in said first attachment element (35), and a hollow space suitable for housing in its inside said fifth wheel (5),
a plurality of second anchoring elements (27) suitable for being joined to said truck chassis (23) and suitable for anchoring in said fourth anchoring elements (25), a second attachment element suitable for being joined to said truck chassis (23) and suitable for being attached in said third attachment element (37), a plurality of lifting means (21) suitable for being arranged vertically under said truck chassis (23), said lifting means (21) being able to raise said box chassis (15).

6. Semi-trailer according to claim 5, **characterized in that** two of said first anchoring elements (17) are joined together forming a first rear overchassis (31), while another two of said first anchoring elements (17) and one of said first attachment elements (35) are joined together forming a second rear overchassis (33), where said semi-trailer comprises two first rear overchassis (31) and two second rear overchassis (33).

7. Unit of road tractor with semi-trailer, **characterized in that** it has a semi-trailer with a semi-trailer chassis (1) and a coupling pin (3) for a fifth wheel (5) of a road tractor in the front part of said semi-trailer chassis (1), where said road tractor comprises a truck chassis (23) and a fifth wheel (5) assembled on said truck chassis (23), said semi-trailer comprising a second coupling pin (7) for a fifth wheel (5) of a road tractor arranged in the rear part of said semi-trailer chassis (1), a plurality of first anchoring elements (17) and two first attachment elements (35), joined to said semi-trailer chassis (1), a rear bumper (11) with a collapsible mechanism in said semi-trailer chassis (1),
two box chassis (15) each of which, in turn, comprises a plurality of support elements, third anchoring elements (19) suitable for anchoring in said first anchoring elements (17), fourth anchoring elements (25), a horizontal cylinder (13) with a rod at the end of which there is a third attachment element (37) suitable for attaching in said first attachment element (35), and a hollow space suitable for housing in its inside said fifth wheel (5),
said road tractor comprising a plurality of second anchoring elements (27) joined to said truck chassis and suitable for anchoring in said fourth anchoring elements (25), a second attachment element joined to said truck chassis (23) and suitable for being attached in said third attachment element (37), and a plurality of lifting means (21) arranged vertically under said truck chassis (23), said lifting means (21) being able to raise said box chassis (15).

8. Method of delivery goods arranged in two boxes (9), **characterized in that** it comprises the following stages:
[a] select a road tractor unit with a semi-trailer according to claim 7,
[b] load the goods in said two boxes (9) in a warehouse of origin,
[c] transport said road tractor with semi-trailer to an intermediate point,
[d] unload one of said boxes (9) from said semi-trailer and load it directly in said road tractor,
[e] transport the box (9) in stage [d] along a first delivery circuit, with said road tractor without said semi-trailer,
[f] return the road tractor to said intermediate point,
[g] unload the box (9) from the road tractor in stage [d] and load it in the semi-trailer,
[h] unload the other of said boxes (9) from said semi-trailer and load it directly in said road tractor,
[i] take box (9) in stage [h] along a second delivery circuit,
[j] return the road tractor to said intermediate point, unload the box (9) from the road tractor in stage [h] and load it in the semi-trailer.

## Patentansprüche

1. - Satz zur Verbindung eines Sattelaufliegers einer gelenkten Einheit, wobei der Sattelauflieger ein Sattelauflieger-Chassis (1) und im vorderen Teil des Sattelauflieger-Chassis (1) einen Kupplungszapfen (3) für eine Sattelkupplung (5) einer Straßenzugmaschine aufweist, wobei die Straßenzugmaschine ein Lastkraftwagen-Chassis (23) und eine auf dem Lastkraftwagen-Chassis (23) verbaute Sattelkupplung (5) aufweist, wobei der Satz umfasst:
[a] einen Kupplungszapfen (7) für eine Sattelkupplung (5) einer Straßenzugmaschine, geeignet, um im hinteren Teil des Sattelauflieger-Chassis (1) festgelegt zu werden,
[b] eine Vielzahl von ersten Verankerungselementen (17), geeignet, um mit dem Sattelauflieger-Chassis (1) verbunden zu werden,
[c] zwei erste Befestigungselemente (35), geeignet, um mit dem Sattelauflieger-Chassis (1) verbunden zu werden,
[d] eine Stoßstange mit einem zusammenklappbaren Mechanismus, geeignet, um mit dem hinteren Teil des Sattelauflieger-Chassis (1) verbunden zu werden,
[e] eine Vielzahl von zweiten Verankerungselementen (27), geeignet, um mit dem Lastkraftwagen-Chassis (23) verbunden zu werden,
[f] ein zweites Befestigungselement, geeignet, um mit dem Lastkraftwagen-Chassis (23) verbunden zu werden,
[g] zwei Kasten-Chassis,
[h] eine Vielzahl von Hebeeinrichtungen (21), geeignet, um vertikal unter dem Lastkraftwagen-Chassis (23) angeordnet zu werden, wobei die Hebeeinrichtungen (21) in der Lage sind, die Kasten-Chassis (15) anzuheben,
[i] wobei jedes der zwei Kasten-Chassis (15) aufweist:
[i1] eine Vielzahl von Stützelementen,
[i2] dritte Verankerungselemente (19), geeignet zum Verankern in den ersten Verankerungselementen (17),
[i3] vierte Verankerungselemente (25), geeignet zum Verankern in den zweiten Verankerungselementen (27),
[i4] einen horizontalen Zylinder (13) mit einer Stange, an deren Ende ein drittes Befestigungselement (37) ist, das geeignet ist, unterschiedslos in dem ersten Befestigungselement (35) oder in dem zweiten Befestigungselement angebracht zu werden,
[i5] einen Hohlraum, geeignet für die Unterbringung der Sattelkupplung (5) in seinem Inneren.

2. Satz nach Anspruch 1, **dadurch gekennzeichnet, dass** zwei der ersten Verankerungselemente (17) miteinander verbunden sind und ein erstes hinteres Überchassis (31) bilden, das geeignet ist, mit dem Sattelauflieger-Chassis (1) verbunden zu werden, während zwei andere der ersten Verankerungselemente (17) und eines der ersten Befestigungselemente (35) miteinander verbunden sind und ein zweites hinteres Überchassis (33) bilden, das ebenfalls geeignet ist, mit dem Sattelauflieger-Chassis (1) verbunden zu werden, wobei der Satz zwei erste hintere Überchassis (31) und zwei zweite hintere Überchassis (33) umfasst.

3. Satz nach einem der Ansprüche 1 oder 2, **dadurch gekennzeichnet, dass** zwei der zweiten Verankerungselemente (27) miteinander verbunden sind und ein erstes vorderes Überchassis bilden, das geeignet ist, mit dem Lastkraftwagen-Chassis (23) in dem Teil vor der Sattelkupplung (5) verbunden zu werden, während zwei andere der zweiten Verankerungselemente (27) und das zweite Befestigungselement miteinander verbunden sind und ein zweites vorderes Überchassis bilden, das geeignet ist, mit dem Lastkraftwagen-Chassis (23) in dem Teil hinter der Sattelkupplung (5) verbunden zu werden.

4. Satz nach einem der Ansprüche 1 bis 3, **dadurch gekennzeichnet, dass** jede der Hebeeinrichtungen (21) ein Teleskopzylinder oder ein Satz aus zwei parallel verbauten Teleskopzylindern ist.

5. Sattelauflieger einer gelenkten Einheit, der ein Sattelauflieger-Chassis (1) und einen Kupplungszapfen (3) für eine Sattelkupplung (5) einer Straßenzugmaschine im vorderen Teil des Sattelauflieger-Chassis (1) aufweist, wobei die Straßenzugmaschine ein Lastkraftwagen-Chassis (23) und eine auf dem Lastkraftwagen-Chassis (23) verbaute Sattelkupplung (5) aufweist, wobei der Sattelauflieger einen zweiten Kupplungszapfen (7) für eine Sattelkupplung (5) einer Straßenzugmaschine im hinteren Teil des Sattelauflieger-Chassis (1) aufweist, **gekennzeichnet durch** eine Vielzahl von ersten Verankerungselementen (17) und zwei erste Befestigungselemente (35), die mit dem Sattelauflieger-Chassis (1) verbunden sind, eine hintere Stoßstange (11) mit einem zusammenklappbaren Mechanismus in dem Sattelauflieger-Chassis (1),
zwei Kasten-Chassis (15), wobei jedes der Kasten-Chassis (15) wiederum eine Vielzahl von Stützelementen, dritte Verankerungselemente (19), die zur Verankerung in den ersten Verankerungselementen (17) geeignet sind, vierte Verankerungselemente (25), einen horizontalen Zylinder (13) mit einer Stange, an deren Ende ein drittes Befestigungselement (37) ist, das geeignet ist, in dem ersten Befestigungselement (35) befestigt zu werden, und einen Hohlraum, geeignet für die Unterbringung der Sattelkupplung (5) in seinem Inneren, aufweist,
eine Vielzahl von zweiten Verankerungselementen (27), die geeignet sind, mit dem Lastkraftwagen-Chassis (23) verbunden zu werden und die geeignet sind zur Verankerung in den vierten Verankerungselementen (25), ein zweites Befestigungselement, das geeignet ist, mit dem Lastkraftwagen-Chassis (23) verbunden zu werden und das geeignet ist, in dem dritten Befestigungselement (37) angebracht zu werden, eine Vielzahl von Hebeeinrichtungen (21), die geeignet sind, um vertikal unter dem Lastkraftwagen-Chassis (23) angeordnet zu werden, wobei die Hebeeinrichtungen (21) in der Lage sind, die Kasten-Chassis (15) anzuheben.

6. Sattelauflieger nach Anspruch 5, **dadurch gekennzeichnet, dass** zwei der ersten Verankerungselemente (17) miteinander verbunden sind und ein erstes hinteres Überchassis (31) bilden, während zwei andere der ersten Verankerungselemente (17) und eines der ersten Befestigungselemente (35) miteinander verbunden sind und ein zweites hinteres Überchassis (33) bilden, wobei der Sattelauflieger zwei erste hintere Überchassis (31) und zwei zweite hintere Überchassis (33) umfasst.

7. Einheit aus Straßenzugmaschine und Sattelauflieger, **dadurch gekennzeichnet, dass** die Einheit einen Sattelauflieger mit einem Sattelauflieger-Chassis (1) und einem Kupplungszapfen (3) für eine Sattelkupplung (5) einer Straßenzugmaschine im vorderen Teil des Sattelauflieger-Chassis (1) aufweist, wobei die Straßenzugmaschine ein Lastkraftwagen-Chassis (23) und eine auf dem Lastkraftwagen-Chassis (23) verbaute Sattelkupplung (5) aufweist, wobei der Sattelauflieger einen zweiten Kupplungszapfen (7) für eine Sattelkupplung (5) einer Straßenzugmaschine im hinteren Teil des Sattelauflieger-Chassis (1), eine Vielzahl von ersten Verankerungselementen (17) und zwei erste Befestigungselemente (35), die mit dem Sattelauflieger-Chassis (1) verbunden sind, eine hintere Stoßstange (11) mit einem zusammenklappbaren Mechanismus in dem Sattelauflieger-Chassis (1),
zwei Kasten-Chassis (15) aufweist, wobei jedes der Kasten-Chassis (15) wiederum eine Vielzahl von Stützelementen, dritte Verankerungselemente (19), die zur Verankerung in den ersten Verankerungselementen (17) geeignet sind, vierte Verankerungselemente (25), einen horizontalen Zylinder (13) mit einer Stange, an deren Ende ein drittes Befestigungselement (37 ist, das geeignet ist, in dem ersten Befestigungselement (35) befestigt zu werden, und einen Hohlraum, geeignet für die Unterbringung der Sattelkupplung (5) in seinem Inneren, aufweist,
wobei die Straßenzugmaschine eine Vielzahl von mit dem Lastkraftwagen-Chassis (23) verbundenen zweiten Verankerungselementen (27), die geeignet sind zur Verankerung in den vierten Verankerungselementen (25), ein mit dem Lastkraftwagen-Chassis (23) verbundenes zweites Befestigungselement, das geeignet ist, in dem dritten Befestigungselement (37) angebracht zu werden, und eine Vielzahl von vertikal unter dem Lastkraftwagen-Chassis (23) angeordneten Hebeeinrichtungen (21) aufweist, wobei die Hebeeinrichtungen (21) in der Lage sind, die Kasten-Chassis (15) anzuheben.

8. Verfahren zur Lieferung von Gütern in zwei Kästen (9), **dadurch gekennzeichnet, dass** das Verfahren die folgenden Stufen aufweist:
[a] Auswahl einer Straßenzugmaschineneinheit mit einem Sattelauflieger nach Anspruch 7,
[b] Verladen der Güter in die zwei Kästen (9) in einem Herkunftslagerhaus,
[c] Transport der Straßenzugmaschine mit dem Sattelauflieger zu einem Zwischenpunkt,
[d] Entladen von einem der Kästen (9) von dem Sattelauflieger und Verladen des Kastens direkt auf die Straßenzugmaschine,
[e] Transport des Kastens (9) in Stufe [d] entlang eines ersten Lieferkreises mit der Straßenzugmaschine ohne den Sattelauflieger,
[f] Zurückbringen der Straßenzugmaschine zu dem Zwischenpunkt,
[g] Entladen des Kastens [9] von der Straßenzugmaschine in Stufe [d] und Verladen des Kastens auf den Sattelauflieger,
[h] Entladen des anderen Kastens (9) von dem Sattelauflieger und Verladen des Kastens direkt auf die Straßenzugmaschine,
[i] Transport des Kastens (9) in Stufe [h] entlang eines zweiten Lieferkreises,
[j] Zurückführen der Straßenzugmaschine zu dem Zwischenpunkt, Entladen des Kastens (9) von der Straßenzugmaschine in Stufe
[h] und Verladen des Kastens auf den Sattelauflieger.

## Revendications

1. Kit de raccordement d'un semi-remorque d'une unité articulée, dans lequel ledit semi-remorque comprend un châssis de semi-remorque (1) et un pivot d'attelage (3) destiné à une cinquième roue (5) d'un tracteur routier dans la partie avant dudit châssis de semi-remorque (1), dans lequel ledit tracteur routier comprend un châssis de camion (23) et une cinquième roue (5) assemblée sur ledit châssis de camion (23), ledit kit comprenant :
[a] un pivot d'attelage (7) destiné à une cinquième roue (5) d'un tracteur routier, adapté pour être fixé dans la partie arrière dudit châssis de semi-remorque (1),
[b] une pluralité de premiers éléments d'ancrage (17) adaptés pour être joints audit châssis de semi-remorque (1),
[c] deux premiers éléments de fixation (35) adaptés pour être joints audit châssis de semi-remorque (1),
[d] un amortisseur muni d'un mécanisme pliable, adapté pour être joint à la partie arrière dudit châssis de semi-remorque (1),
[e] une pluralité de seconds éléments d'ancrage (27) adaptés pour être joints audit châssis de camion (23),
[f] un second élément de fixation adapté pour être joint audit châssis de camion (23),
[g] deux châssis de conteneurs,
[h] une pluralité de moyens de levage (21) adaptés pour être placés à la verticale sous ledit châssis de camion (23), lesdits moyens de levage (21) pouvant soulever ledit châssis de conteneur (15),
[i] chacun des deux châssis de conteneurs (15), à leur tour, comprenant :
[i1] une pluralité d'éléments de support,
[i2] des troisièmes éléments d'ancrage (19) adaptés pour s'ancrer dans lesdits premiers éléments d'ancrage (17),
[i3] des quatrièmes éléments d'ancrage (25) adaptés pour s'ancrer dans lesdits seconds éléments d'ancrage (27),
[i4] un vérin horizontal (13) muni d'une tige à l'extrémité de laquelle se trouve un troisième élément de fixation (37) adapté pour être fixé de manière indistincte dans ledit premier élément de fixation (35) ou dans ledit second élément de fixation, et
[i5] un espace creux adapté pour loger ladite cinquième roue (5).

2. Kit selon la revendication 1, **caractérisé en ce que** deux desdits premiers éléments d'ancrage (17) sont joints afin de former un premier sur-châssis arrière (31) adapté pour être joint audit châssis de semi-remorque (1), tandis que deux autres desdits premiers éléments d'ancrage (17) et l'un desdits premiers éléments de fixation (35) sont joints afin de former un second sur-châssis arrière (33) également adapté pour être joint audit châssis de semi-remorque (1), où ledit kit comprend deux premiers sur-châssis arrières (31) et deux seconds sur-châssis arrières (33).

3. Kit selon la revendication 1 ou 2, **caractérisé en ce que** deux desdits seconds éléments d'ancrage (27) sont joints ensemble afin de former un premier sur-châssis avant adapté pour être joint audit châssis de camion (23) dans la partie située en face de ladite cinquième roue (5), tandis que deux autres desdits seconds éléments d'ancrage (27) et ledit second élément de fixation sont joints afin de former un second sur-châssis avant adapté pour être joint audit châssis de camion (23) dans la partie située derrière ladite cinquième roue (5).

4. Kit selon l'une quelconque des revendications 1 à 3, **caractérisé en ce que** chacun desdits moyens de levage (21) est un vérin télescopique ou un ensemble de deux vérins assemblés en parallèle.

5. Semi-remorque dans une unité articulée, qui comprend un châssis de semi-remorque (1) et un pivot d'attelage (3) destiné à une cinquième roue (5) d'un tracteur routier dans la partie avant dudit châssis de semi-remorque (1), dans lequel ledit tracteur routier comprend un châssis de camion (23) et une cinquième roue (5) assemblée sur ledit châssis de camion (23), ledit semi-remorque comprenant un second pivot d'attelage (7) destiné à une cinquième roue (5) d'un tracteur routier placé dans la partie arrière dudit châssis de semi-remorque (1), **caractérisé en ce qu'**il comprend une pluralité de premiers éléments d'ancrage (17) et deux premiers éléments de fixation (35), joints audit châssis de semi-remorque (1), un amortisseur arrière (11) muni d'un mécanisme pliant dans ledit châssis de semi-remorque (1),
deux châssis de conteneurs (15) qui comprennent chacun, à leur tour, une pluralité d'éléments de support, des troisièmes éléments d'ancrage (19) adaptés pour s'ancrer dans lesdits premiers éléments d'ancrage (17), des quatrièmes éléments d'ancrage (25), un vérin horizontal (13) muni d'une tige à l'extrémité de laquelle se trouve un troisième élément de fixation (37) adapté pour être fixé dans ledit premier élément de fixation (35), et un espace creux adapté pour loger ladite cinquième roue (5),
une pluralité de seconds éléments d'ancrage (27) adaptés pour être joints audit châssis de camion (23) et adaptés pour s'ancrer dans lesdits quatrièmes éléments d'ancrage (25), un second élément de fixation adapté pour être joint audit châssis de camion (23) et adapté pour être fixé dans ledit troisième élément de fixation (37), une pluralité de moyens de levage (21) adaptés pour être placés à la verticale sous ledit châssis de camion (23), lesdits moyens de levage (21) pouvant soulever ledit châssis de conteneur (15).

6. Semi-remorque selon la revendication 5, **caractérisé en ce que** deux desdits premiers éléments d'ancrage (17) sont joints afin de former un premier sur-châssis arrière (31), tandis que deux autres desdits premiers éléments d'ancrage (17) et l'un desdits premiers éléments de fixation (35) sont joints afin de former un second sur-châssis arrière (33), où ledit semi-remorque comprend deux premiers sur-châssis arrières (31) et deux seconds sur-châssis arrières (33).

7. Unité de tracteur routier avec semi-remorque, **caractérisée en ce qu'**elle possède un semi-remorque avec un châssis de semi-remorque (1) et un pivot d'attelage (3) destiné à une cinquième roue (5) d'un tracteur routier dans la partie avant dudit châssis de semi-remorque (1), où ledit tracteur routier comprend un châssis de camion (23) et une cinquième roue (5) assemblée sur ledit châssis de camion (23), ledit semi-remorque comprenant un second pivot d'attelage (7) destiné à une cinquième roue (5) d'un tracteur routier placé dans la partie arrière dudit châssis de semi-remorque (1), une pluralité de premiers éléments d'ancrage (17) et deux premiers éléments de fixation (35), joints audit châssis de semi-remorque (1), un amortisseur arrière (11) muni d'un mécanisme pliant dans ledit châssis de semi-remorque (1),
deux châssis de conteneurs (15) qui comprennent chacun, à leur tour, une pluralité d'éléments de support, des troisièmes éléments d'ancrage (19) adaptés pour s'ancrer dans lesdits premiers éléments d'ancrage (17), des quatrièmes éléments d'ancrage (25), un vérin horizontal (13) muni d'une tige à l'extrémité de laquelle se trouve un troisième élément de fixation (37) adapté pour être fixé dans ledit premier élément de fixation (35), et un espace creux adapté pour loger ladite cinquième roue (5),
ledit tracteur routier comprenant une pluralité de seconds éléments d'ancrage (27) joints audit châssis de camion et adaptés pour s'ancrer dans lesdits quatrièmes éléments d'ancrage (25), un second élément de fixation adapté pour être joint audit châssis de camion (23) et adapté pour être fixé dans ledit troisième élément de fixation (37), et une pluralité de moyens de levage (21) placés à la verticale sous ledit châssis de camion (23), lesdits moyens de levage (21) pouvant soulever ledit châssis de conteneur (15).

8. Procédé de livraison de marchandises placées dans deux conteneurs (9), **caractérisé en ce qu'**il comprend les étapes suivantes :
[a] la sélection d'une unité de tracteur routier avec une semi-remorque selon la revendication 7,
[b] le chargement des marchandises dans lesdits deux conteneurs (9) dans un entrepôt d'origine,
[c] le transport dudit tracteur routier avec la semi-remorque jusqu'à un point intermédiaire,
[d] le déchargement de l'un desdits conteneurs (9) dudit semi-remorque et son chargement directement sur ledit tracteur routier,
[e] le transport du conteneur (9) de l'étape [d] le long d'un premier circuit de livraison, avec ledit tracteur routier sans ledit semi-remorque,
[f] le retour du tracteur routier audit point intermédiaire,
[g] le déchargement du conteneur (9) du tracteur routier de l'étape [d] et son chargement sur le semi-remorque,
[h] le déchargement de l'autre desdits conteneurs (9) dudit semi-remorque et son chargement directement sur ledit tracteur routier,
[i] le transport du conteneur (9) de l'étape [h] le long d'un second circuit de livraison,
[j] le retour du tracteur routier audit point intermédiaire, le déchargement du conteneur (9) du tracteur routier de l'étape [h] et son chargement sur le semi-remorque.
